# EUROPÄISCHE PATENTSCHRIFT

(11) **EP 2 406 154 B1**
(45) Veröffentlichungstag und Bekanntmachung des Hinweises auf die Patenterteilung: **01.01.2014**
(21) Anmeldenummer: 10706580.7
(22) Anmeldetag: 18.02.2010
(51) Int. Cl.: B65G 13/12

(54) **ÜBERGABEFÖRDERER ZUM TRANSPORTIEREN GENORMTER LADUNGSEINHEITEN**
TRANSFER CONVEYOR FOR TRANSPORTING STANDARDIZED LOADING UNITS
CONVOYEUR DE TRANSFERT POUR TRANSPORTER DES UNITÉS DE CHARGEMENT NORMALISÉES

(30) Priorität: 10.03.2009 DE 102009012037
(43) Veröffentlichungstag der Anmeldung: 18.01.2012
(73) Patentinhaber: Siemens Aktiengesellschaft, 80333 München (DE)
(72) Erfinder: KLEIN, Matthias, 63456 Hanau (DE)
(86) Internationale Anmeldenummer: PCT/EP2010/052060
(87) Internationale Veröffentlichungsnummer: WO 2010/102890

(56) Entgegenhaltungen:
- DE-B- 1 059 835
- GB-A- 286 190
- JP-A- 57 131 609
- JP-A- 59 172 312

## Beschreibung

Die Erfindung betrifft einen Übergabeförderer zum Transportieren genormter Ladungseinheiten, wie Frachtcontainer, Paletten oder dergleichen, von einem ersten Höhenniveau auf ein zweites Höhenniveau, nach dem Oberbegriff des Anspruchs 1, wie er aus der DE 1059835 B1 bekannt ist.

>

Derartige Ubergabeförderer werden beispielsweise verwendet, um im Cargobetrieb Lasten, wie Norm-Container oder -Paletten, von einem Zwischenlager auf die Ladefläche eines im Wesentlichen höhenniveaugleichen Transportfahrzeuges (Dolly) zu verbringen. Dabei ergibt sich das Problem, dass sich die beiden Höhenniveaus häufig nicht in der angestrebten gleichen Ebene befinden, weil Unterschiede am Transportfahrzeug Abweichungen verursachen. So kann schon ein abgefahrener Reifen eine Höhendifferenz von wenigen Zentimetern verursachen, was dazu führt, dass die Kante der Ladeeinheit gegen den Übergabeförderer stößt und eine Übergabe nur möglich ist, wenn die häufig tonnenschwere Ladeeinheit über diesen Höhenunterschied hinweggehoben wird.

Bislang hat man das Problem dadurch gelöst, dass die Wippe des Übergabeförderers einseitig auf das richtige Niveau angehoben wurde, und zwar mit Hilfe kräftiger Spindeltriebe, die geeignet sind, auch sehr schwere Lasten anzuheben. Auf die Weise konnten die Ladeinheiten in eine Förderebene verbracht werden, die den Transport über die Transportrollen des Übergabeförderers zum und auf das Transportfahrzeug ermöglichte. Eine Anpassung der Wippstellung der Wippe an den aktuellen Höhenunterschied war möglich.

Die verwendeten schweren Spindeltriebe oder andere Akteure sind jedoch aufwändig und kostenintensiv durch notwendige Wartungsmaßnahmen und Energiekosten.

Aufgabe der vorliegenden Erfindung ist die Schaffung eines effektiven und kostengünstigen gattungsgemäßen Übergabeförderers, der ohne die aufwändigen mechanischen Antriebe der Wippe ebenso leistungsfähig, aber wartungsarm und energiesparend die Höhenunterschiede der beiden Höhenniveaus überwindet.

Die Aufgabe wird mit dem Übergabeförderer nach Anspruch 1 gelöst.

Erfindungsgemäß ist der Übergabeförderer ein Rollenförderer, zwischen dessen angetriebenen Transportrollen einzelne unterhalb der Förderebene des Übergabeförderers gelagerte und aus dieser nach oben ausschwenkbare Auslöserollen für die Kinematik der Wippe vorgesehen sind, die beim Transport der Ladungseinheit über den Übergabeförderer durch diese betätigbar sind. Diese Auslöserollen sind ein Teil der von der Ladeeinheit ausgelösten Wipp-Kinematik, die ein funktionelles Verschwenken der Wippe mit der Ladeeinheit erst möglich macht.

Nach einem wichtigen Merkmal der Erfindung ist vorgesehen, dass die Wippe von den Auslöserollen gesteuert in einer waagerechten Position des Übergabeförderers vorübergehend festlegbar ist. Die Fixierung der Wippe in der Waagerechten sorgt für die Einhaltung der erforderlichen Höhenlage zur Übergabe der Ladeeinheit auf das Transportfahrzeug, auch wenn sich dessen Ladefläche tiefer befindet als die Lagerfläche.

Vorzugsweise fluchtet erfindungsgemäß in der Ausgangsstellung der Wippe das eine Ende des Übergabeförderers mit der Ebene des niedrigeren Höhenniveaus und am anderen Ende des Übergabeförderers ist mindestens dessen erste Transportrolle unterhalb der Auflageebene der Ladungseinheit angeordnet. Durch diese Ausgestaltung wird eine Übergabe der Ladeeinheit auf den Übergabeförderer, zunächst auf die erste Transportrolle ermöglicht. Die Ladeeinheit drückt den ihr zugewandten Teil der Wippe nach unten.

Nach einem anderen Merkmal der Erfindung ist zu der mindestens ersten Transportrolle benachbart mindestens eine der Auslöserollen oberhalb der Förderebene des Übergabeförderers positioniert, die beim Transport der Ladeeinheit über die Transportrollen des Übergabeförderers nach unten gedrückt wird und eine Klinke auslöst, die durch Einrasten in ein stationäres Widerlager die Wippe und damit den Übergabeförderer in der Waagerechten fixiert, solange sich die Ladeeinheit auf dem Übergabeförderer befindet. Die Klinke ist Teil eines Hebels, der von der Auslöserolle, vorzugsweise über ein Gestänge betätigt wird und die ausgelöst wird, sobald die Auslöserolle von der aufliegenden Ladeeinheit niedergedrückt wird.

Mindestens eine zweite gleichartige Auslöserolle ist im Bereich des entgegengesetzten Endes der Wippe zwischen den Transportrollen angeordnet, die mit der ersten Auslöserolle und/oder der Klinke wirkmäßig verbunden ist und von der aufliegenden Ladeeinheit unterhalb der Förderebene des Übergabeförderers gehalten wird, bis deren äußere Kante die Auslöserolle und damit die Klinke im Widerlager frei gibt, so dass der Übergabeförderers in seine Ausgangsstellung zurückbewegbar ist. Diese zweite Auslöserolle, die vorzugsweise über ein Gestänge mit der ersten Auslöserolle verbunden ist, wird von der über den Übergabeförderer transportierten Ladeeinheit auch noch dann niedergehalten, wenn deren hintere Kante die erste Auslöserolle bereits verlassen hat. Da beide Rollen miteinander wirkmäßig verbunden sind, bleibt die Klinke in der verriegelten Position im Widerlager so lange, bis die Ladeeinheit den Übergabeförderer verlassen hat. Erst dann, wenn die hintere Kante der Ladeeinheit die zweite Auslöserolle frei gegeben hat, kann die Klinke zurückweichen und die Wippe frei geben, so dass diese in ihre Ausgangslage zurückschwenkt. Dann ist aber die Ladeeinheit schon zum überwiegenden Teil auf der Ladefläche des Transportfahrzeuges.

Um eine Ladeeinheit beispielsweise von dem Transportfahrzeug an einen Lagerplatz zu übergeben, also in umgekehrter Richtung zu transportieren, ist erfindungsgemäß vorgesehen, dass beim Transport einer Ladeeinheit von dem niedrigen Höhenniveau zu dem anderen Höhenniveau die zu transportierende Ladeeinheit zunächst auf den niveaugleichen Übergabeförderer übergeben wird, wobei die Ladeeinheit die zweite Auslöserolle und die mit ihr verbundene erste Auslöserolle unter die Transportebene des Übergabeförderers bewegt und dadurch die mit ihr wirkmäßig verbundene Klinke in eine Bereitschaftsstellung bringt. Die Klinke kann in dieser Position noch nicht in das Widerlager einrasten, weil in der Ausgangsstellung der Wippe der der Ladeeinheit zugewandter Bereich des Übergabeförderers tiefer liegt und die Klinke die Ausnehmung im Widerlager nicht erreicht.

Erst beim Transport der Ladeeinheit über die Schwenkachse der Wippe hinweg, kippt erfindungsgemäß die Wippe in die Waagerechte, wo sich die Klinke aus ihrer Bereitschaftsstellung in das Widerlager bewegt. Bei gleichzeitig von der Ladeeinheit niedergehaltener erster Auslöserolle wird die Wippe verriegelt.

Nach Verlassen des Übergabeförderers und Freiwerden der ersten und zweiten Auslöserolle von der Ladeeinheit sind die Auslöserollen in ihre Ausgangsposition oberhalb der Transportebene zurück bewegbar. Nach Freigeben der Klinke wird die Wippe in ihre Ausgangsstellung zurückschwenkt.

Die vorgeschlagene Konstruktion des Übergabeförderers ist auch ohne Fremdantrieb in der Lage, Ladeeinheiten selbst dann zu übergeben, wenn sich das Ausgangsniveau und das Endniveau nicht in einer gemeinsamen Ebene befinden. Die gefundene Lösung ist überraschend einfach und funktionssicher.

Ein Ausführungsbeispiel der Erfindung ist in der Zeichnung dargestellt und wird nachfolgend beschrieben.

Es zeigt:
- Figur 1: eine schematische Seitenansicht des Übergabeförderers nach der Erfindung,
- Figuren 2 - 5: den Transport eines Containers von einem Lagerplatz zu einem Transportmittel in vier Schritten und
- Figuren 6 bis 9: den Transport eines Containers vom Transportmittel zum Lagerplatz in vier Schritten.

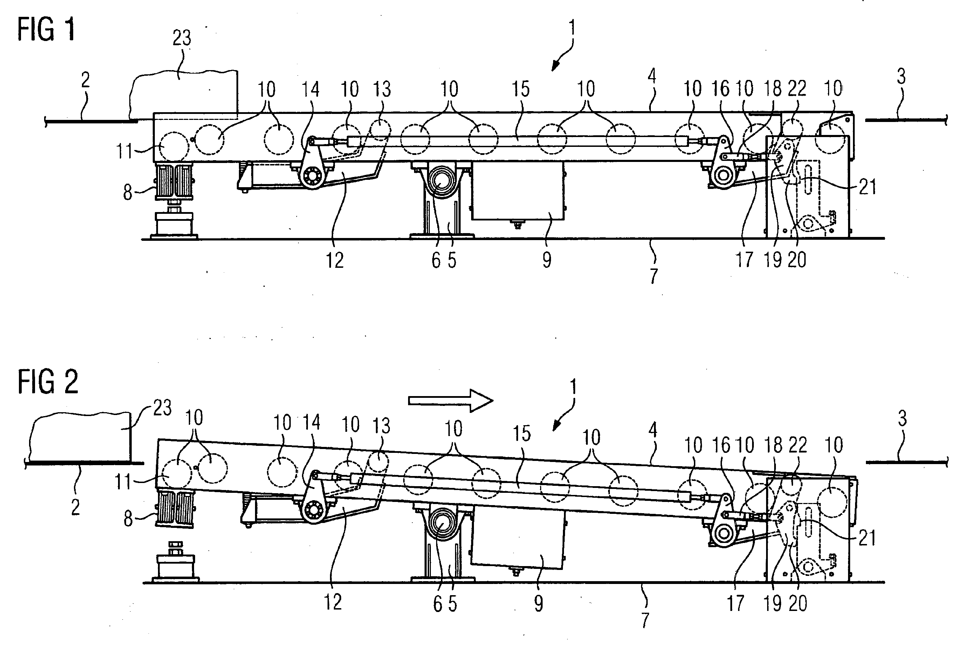

In Figur 1 ist mit 1 insgesamt der Übergabeförderer der Erfindung bezeichnet, der zwischen einem Lagerplatz 2 und einem Transportmittel 3 (Dolly) angeordnet ist. Der Übergabeförderer ist Teil einer Wippe 4, die bei 5 am Planum 7 abgestützt ist. Die Wippe wird über ein Ausgleichsgewicht 8 weitgehend ausbalanciert, an dessen Unterseite ein Endanschlag für die Wippe 4 am Planum 7 vorgesehen ist. Der Übergabeförderer selbst wird durch die angetriebenen Transportrollen 10 gebildet, die in der Wippe 4 drehbar gelagert sind und über einen bei 9 angedeuteten zentralen Antrieb in beiden Richtungen drehangetrieben sind. Die erste Transportrolle 11 auf der Seite des Transportplatzes 2 ist unterhalb der Transportebene der Transportrollen 10 angeordnet, um einen Container 22, wie später noch beschrieben wird, übernehmen zu können.

Unterhalb der Wippe 4 ist ein Schwenkhebel 12 gelagert, der an seinem freien Ende die Auslöserolle 13 trägt, die in einer Verschwenkstellung zwischen zwei Transportrollen 10 aus der Transportebene der Transportrollen nach oben herausragt. In einer zweiten Verschwenkstellung des Hebels 12 taucht die Auslöserolle 13 nach unten unter die Transportebene, die durch die Transportrollen 10 gebildet wird. Auf der Schwenkachse des Hebels 12 ist ein weiterer Hebel 14 angeordnet, der zusammen mit dem Hebel 12 verschwenkt wird, sobald der Schwenkhebel 12 bewegt wird. Über eine Koppelstange 15 ist der Hebel 14 mit einem weiteren Hebel 16 an der entgegengesetzten Seite der Wippe verbunden, der seinerseits auf dem Schwenkhebel 17 angeordnet ist, an dessen freien Ende die zweite Auslöserolle 22 angeordnet ist. Auch diese zweite Auslöserolle 22 ist aus einer Stellung unterhalb der Transportebene des Übergabeförderers in eine Stellung oberhalb der Transportebene verschwenkbar, in der die Auslöserolle 22 zwischen zwei Transportrollen 10 nach oben herausragt. Mit dem Hebel 16 ist eine vorzugsweise in ihrer Längsrichtung federnde Koppelstange verbunden, die an ihrem anderen freien Ende an einer Klinke 19 angelenkt ist, die mit ihrer Nase 20 in einer Ausnehmung an dem Widerlager 21 einklinkbar ist. Das Widerlager 21 ist statisch am Planum 7 abgestützt; die Wippe 4 ist zusammen mit der Klinke 19 um die Schwenkachse 6 verstellbar. Die Schwenkwege der Wippe 4 sind, angepasst an die üblichen Höhenunterschiede relativ gering, stellen aber einen stufenlosen Übergang zwischen der Lagerebene und der Ebene des Transportwagens her.

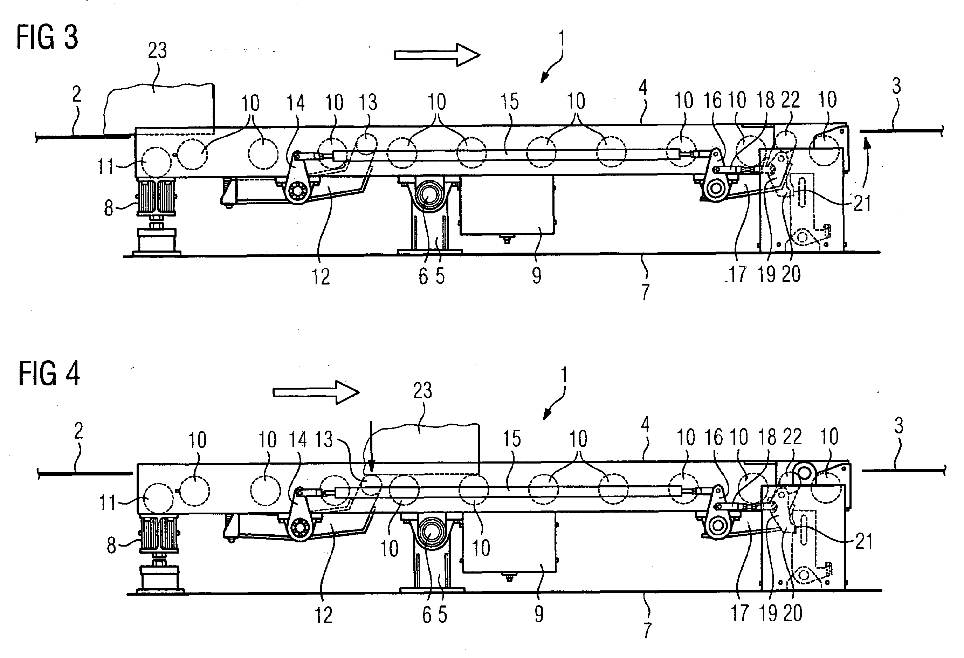

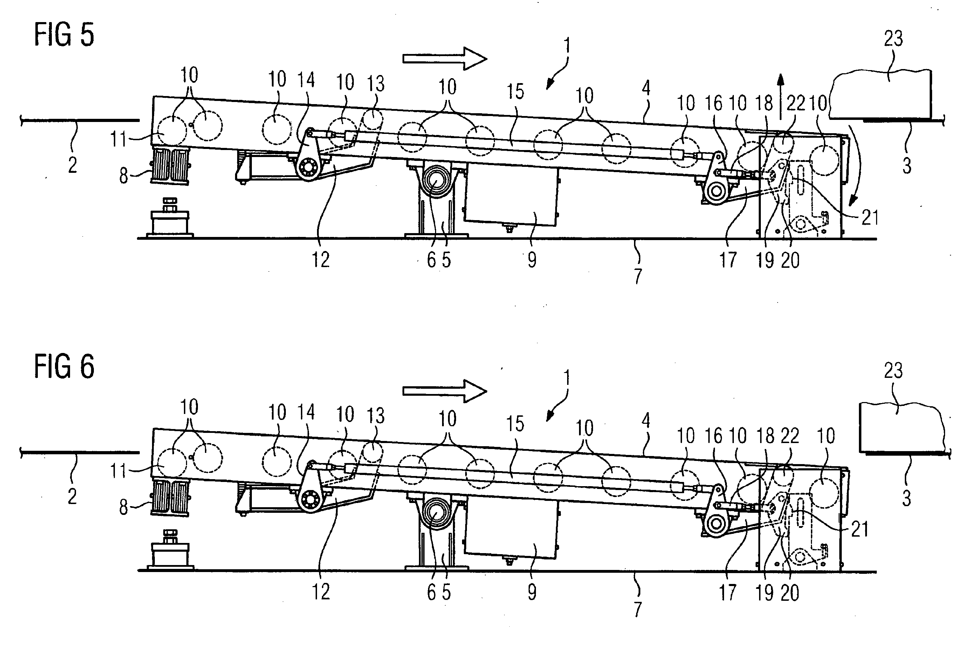

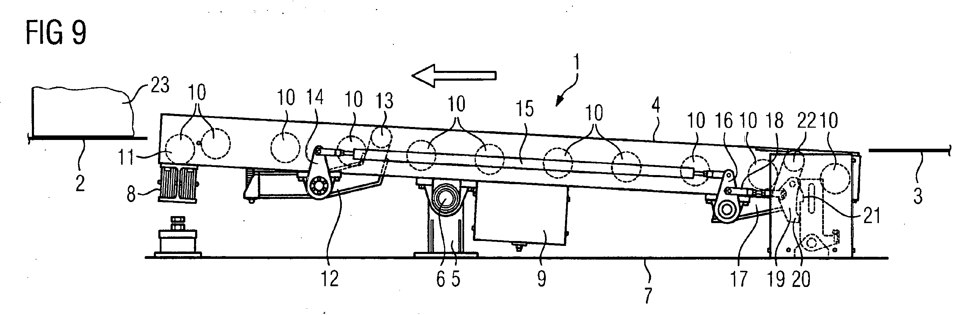

Die Funktionsweise der Erfindung wird in den Figuren 2 bis 9 in einzelnen Schritten dargestellt und nachfolgend beschrieben. Gleiche Teile sind gleich bezeichnet. In Figur 1 ist bei 23 ein Container angedeutet, der auf dem Lagerplatz 2 aufliegt. Dieser Container 23 soll auf die Ladeplattform des Transportmittels 3, einem s.g. Dolly, überführt werden, das auf der entgegengesetzten Seite der Wippe 4 (Figur 5) vorgefahren ist. In Figur 2 ist die Ausgangsstellung der Wippe dargestellt, in der der (in der Zeichnungsebene gesehen) rechte Teil der Wippe 4 tiefer als der linke Teil liegt. Wie aus Figur 3 erkennbar ist der Container 23 mit seiner vorderen Kante auf die erste Transportrolle 11 geführt worden und hat diese soweit nach unten gedrückt, dass die zweite Transportrolle 10 unter den Container 23 zur Anlage kommt. Dabei wurde der Übergabeförderer mit der Wippe 4 in eine waagerechte Position gedrückt, so dass der Container 23weiter in Pfeilrichtung transportiert werden kann. Sobald die voreilende Kante des Containers 23 die Auslöserolle 13 erreicht hat, drückt der Container 23 diese, zusammen mit dem Hebel 12, nach unten unter die Transportebene der Transportrollen 10. Durch diese Schwenkbewegung des Hebels 12 wird die Klinke 19 über die am Hebel 14 angelenkte Koppelstange 15 und den Hebel 16 sowie die Koppelstange 18 in die Ausnehmung des Widerlagers 21 gedrückt, so dass die Wippe 4 in der waagerechten Stellung fixiert ist. Diese Stellung ist in Figur 4 dargestellt. Ebenfalls erkennbar ist in Figur 4, dass der Container 23 bereits zur Hälfte auf dem Übergabeförderer bzw. der Wippe 4 aufliegt. Auf diese Weise ist sichergestellt, dass die Wippe (in der Zeichnung gesehen) rechts seine höhere Position beibehält, in der die Transportebene der Transportrollen 10 oberhalb der Ladeebene des Transportmittels liegt. In dieser Stellung kann der Container 23, wie in Figur 5 dargestellt, auf das Transportmittel 3 übergeben werden. Die hintere Kante des Containers 23 hat dann zwar bereits die Auslöserolle 13 verlassen; dadurch dass die Auslöserolle 13 über die Hebel 12 und 14 und die Koppelstange 15 mit dem Hebel 16 und 17 verbunden ist, wird aber sichergestellt, dass die Klinke, die mittelbar mit dem Hebel 16 verbunden ist, im Widerlager 21 verbleibt, so lange noch ein Teil des Containers die Auslöserolle 22 nach unten drückt. Erst wenn der Container 23 die Auslöserolle 22 verlassen hat, wird die Klinke 19 entsperrt und der Übergabeförderer fährt mit der Wippe 4 in die Ausgangsstellung zurück, die in Figur 2 dargestellt ist.

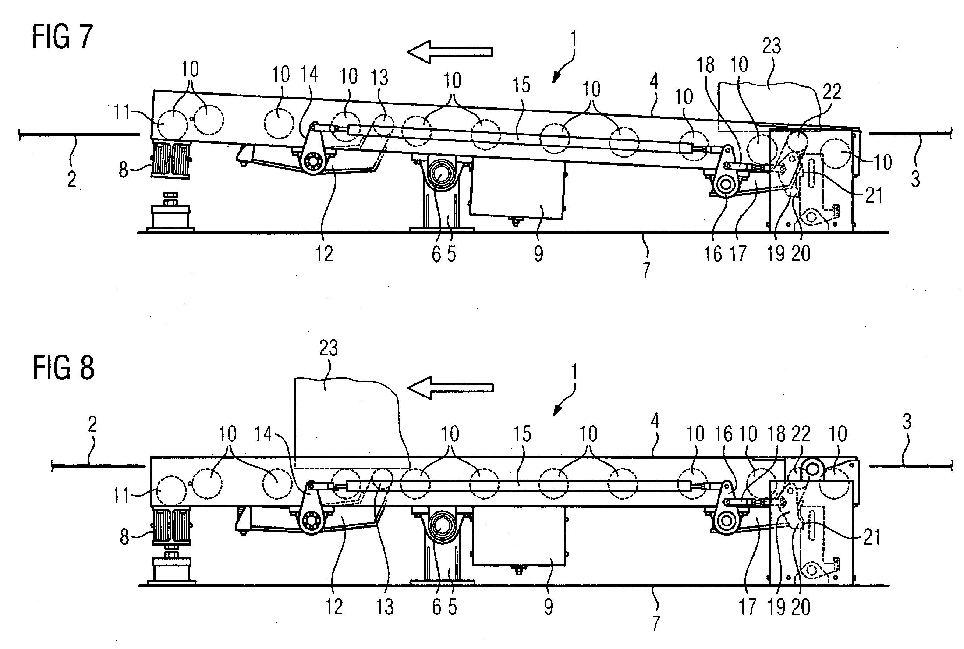

Soll ein Container 23 von der Ladefläche des Transportwagens 3 zu dem Lagerplatz überführt werden, so steht der Übergabeförderer bzw. die Wippe 4 bereits in der richtigen Ausgangsstellung, nämlich unterhalb des Höhenniveaus der Ladefläche (Figur 6). Wie in Figur 7 angedeutet hat bei weiterem Fortschritt in Transportrichtung gemäß dem Pfeil der Container 23 die Auslöserolle 22 erreicht und diese nach unten unter die Transportebene der Transportrollen 10 gedrückt. Dabei wurde über den Hebel 17 und den daran befestigten Hebel 16 sowie die Koppelstange 18 die Klinke 19 in Richtung Widerlager gedrückt, kann jedoch wegen der unterschiedlichen Höhenlagen noch nicht mit der Nase 20 in das Widerlager 21 einrasten. Dennoch bewirkt eine in die Koppelstange 18 integrierte Feder ein Andrücken der Klinke 19 gegen das Widerlager 21.

In Figur 8 ist eine Position des Containers 23 dargestellt, bei dem dieser bereits über den Drehpunkt 6 der Wippe 4 gefördert wurde. Die Wippe 4 mit dem Übergabeförderer kippt um den Drehpunkt in die Waagerechte und bewirkt dabei gleichzeitig ein Einrasten der Klinke 19 in das Widerlager 21, weil aufgrund der niedergehaltenen Auslöserolle 13 über die Koppelstange 18 ein Druck auf die Klinke 19 in Richtung Widerlager 21 aufgebaut ist. Der Übergabeförderer bzw. die Wippe 4 ist bei eingerasteter Klinke 19 in der Waagerechten fixiert, so dass der Container 23 weiter in Richtung Lagerstelle 2 transportiert werden kann. Auf seinen Weg in Pfeilrichtung erreicht der Container, wie bereits in Figur 8 erkennbar, die erste Auslöserolle 13, die aufgrund der Koppelverbindung über die Koppelstange 15 mit dem Hebel 16 und die Kinematik der Hebel 12 und 14 nach unten gehalten ist. Dadurch wird die Auslöserolle 13 auch unterhalb der Transportebene gehalten, wenn die hintere Kante des Containers 23 auch die zweite Auslöserolle 22 bereits freigegeben hat. Erst wenn die hintere Kante des Containers 23 die Auslöserolle 13 freigegeben hat und der Container zum überwiegenden Teil auf der Lagerstelle 2 angelangt ist, wird die Klinke 19 aus dem Widerlager 21 gelöst, so dass die Wippe 4 und damit der Übergabeförderer in die Ausgangsstellung der Figur 1 zurückfällt und für einen weiteren Transportvorgang bereit ist.

## Patentansprüche

1. Übergabeförderer zum Transportieren genormter Ladungseinheiten, wie Frachtcontainer, Paletten oder dergleichen, von einem ersten Höhenniveau auf ein zweites Höhenniveau, wobei der Übergabeförderer Teil einer Wippe ist, die um eine, bezogen auf die Längserstreckung des Übergabeförderers, im mittleren Bereich der Wippe vorgesehene Schwenkachse aus einer Position, in der das eine Ende der Wippe mit dem einen Höhenniveau fluchtet in eine zweite Position, in der das andere Ende der Wippe mit dem anderen Höhenniveau fluchtet, neigungsverstellbar ist, wobei die Wippe (4) durch das Eigengewicht der auf dem Übergabeförderer transportierten Ladungseinheit (23) verschwenkbar ist, wobei
die Wippe (4) beim Transportieren einer Ladungseinheit (23) von einem höher gelegenen Lagerplatz (2) zu einem tiefer gelegenen Transportmittel (3)
- eine Ausgangsstellung, in welcher das dem Transportmittel (3) zugewandte Ende der Wippe (4) tiefer ist als das dem Lagerplatz (2) zugewandte Ende der Wippe (4) und
- eine waagerechte Stellung aufweist, in welche sie durch das Eigengewicht der auf dem Übergabeförderer transportierten Ladungseinheit (23) gedrückt wird,
**dadurch gekennzeichnet, dass**
der Übergabeförderer ein Rollenförderer ist, zwischen dessen angetriebenen Transportrollen (10) einzelne unterhalb der Förderebene des Übergabeförderers gelagerte und aus dieser nach oben ausschwenkbare Auslöserollen (13, 22) für die Kinematik der Wippe (4) vorgesehen sind, die beim Transport der Ladungseinheit (23) über den Übergabeförderer durch diese betätigbar sind.

2. Übergabeförderer nach Anspruch 1,
**dadurch gekennzeichnet, dass**
die Wippe (4) von den Auslöserollen (13, 22) gesteuert in einer waagerechten Position des Übergabeförderers vorübergehend festlegbar ist.

3. Übergabeförderer nach Anspruch 1 bis 2,
**dadurch gekennzeichnet, dass**
in der Ausgangsstellung der Wippe (4) das eine Ende des Übergabeförderers mit der Ebene des niedrigeren Höhenniveau fluchtet und am anderen Ende des Übergabeförderers mindestens dessen erste Transportrolle (11) unterhalb der Auflageebene der Ladungseinheit (23) angeordnet ist.

4. Übergabeförderer nach Anspruch 3,
**dadurch gekennzeichnet, dass**
zu der mindestens ersten Transportrolle (11) benachbart mindestens eine der Auslöserollen (13) oberhalb der Förderebene des Übergabeförderers positioniert ist, die beim Transport der Ladeeinheit (23) über die Transportrollen (13) des Übergabeförderers nach unten gedrückt wird und eine Klinke (19) auslöst, die durch Einrasten in ein stationäres Widerlager (21) die Wippe (4) und damit den Übergabeförderer in der Waagerechten fixiert, solange sich die Ladeeinheit (23) auf dem Übergabeförderer befindet.

5. Übergabeförderer nach einem der Ansprüche 2 bis 4,
**dadurch gekennzeichnet, dass**
mindestens eine zweite gleichartige Auslöserolle (22) im Bereich des entgegengesetzten Endes der Wippe (4) zwischen den Transportrollen (10) angeordnet ist, die mit der ersten Auslöserolle (13) und/oder der Klinke (19) wirkmäßig verbunden ist und von der aufliegenden Ladeeinheit (23) unterhalb der Förderebene des Übergabeförderers gehalten wird, bis deren äußere Kante die Auslöserolle (13 bzw. 22) und damit die Klinke (19) im Widerlager (21) frei gibt, so dass der Übergabeförderers in seine Ausgangsstellung zurückbewegbar ist.

6. Übergabeförderer nach Anspruch 5,
**dadurch gekennzeichnet, dass**
beim Transport einer Ladeeinheit (23) von dem niedrigen Höhenniveau zu dem anderen Höhenniveau die zu transportierende Ladeeinheit (23) zunächst auf den niveaugleichen Übergabeförderer übergeben wird, wobei die Ladeeinheit (23) die zweite Auslöserolle (22) und die mit ihr verbundene erste Auslöserolle (13) unter die Transportebene des Übergabeförderers bewegt und dadurch die mit ihr wirkmäßig verbundene Klinke (19) in eine Bereitschaftsstellung bringt.

7. Übergabeförderer nach Anspruch 6, **dadurch gekennzeichnet, dass**
beim Transport der Ladeeinheit über die Schwenkachse (6) der Wippe (4) hinweg, die Wippe (4) in die Waagerechte kippt, in welcher Stellung sich die Klinke (19) aus ihrer Bereitschaftsstellung in das Widerlager (21) bewegt und bei gleichzeitig von der Ladeeinheit niedergehaltener erster Auslöserolle (13) die Wippe (4) verriegelt.

8. Übergabeförderer nach Anspruch 7,
**dadurch gekennzeichnet, dass**
nach Verlassen des Übergabeförderers und Freiwerden der ersten und zweiten Auslöserolle (13 und 22) von der Ladeeinheit (23) die Auslöserollen (13 und 22) in ihre Ausgangspositionen oberhalb der Transportebene zurück bewegbar sind und durch Freigeben der Klinke (19) die Wippe (4) in ihre Ausgangsstellung zurückschwenkt.

9. Übergabeförderer nach Anspruch 1,
**dadurch gekennzeichnet, dass**
Mittel vorgesehen sind, durch welche die Wippe (4) in der waagerechten Stellung fixiert wird, und die Ladungseinheit (23) in dieser Stellung auf das Transportmittel (3) übergeben wird.

10. Übergabeförderer nach Anspruch 1 und 9,
**dadurch gekennzeichnet, dass**
der Übergabeförderer eine Transportebene bildet, die in der waagerechten Stellung der Wippe (4) oberhalb der Ladeebene des Transportmittels (3) liegt.

## Claims

1. Transfer conveyor for transporting standardized unit loads, such as freight containers, pallets or the like, from a first height level to a second height level, wherein the transfer conveyor is part of a rocker, the inclination of which about a pivoting axis provided in the central region of the rocker with respect to the longitudinal extent of the transfer conveyor, can be adjusted from a position in which one end of the rocker is aligned with one of the height levels into a second position in which the other end of the rocker is aligned with the other height level,
wherein the rocker (4) can be pivoted under the weight of the unit load (23) which is transported on the transfer conveyor,
wherein, during the transportation of a unit load (23) from a storage location (2) at a relatively high position to a transportation means (3) at a relatively low position, the rocker (4) has
a home position in which the end of the rocker (4) facing the transportation means (3) is lower than the end of the rocker (4) facing the storage location (2) and
a horizontal position in which it is pressed by the intrinsic weight of the unit load (23) transported on the transfer conveyor,
**characterized in that**
the transfer conveyor is a roller conveyor, between the driven transporting rollers (10) of which individual triggering rollers (13, 22), which are mounted underneath the conveying plane of the transfer conveyor and can be pivoted upward out of said plane, are provided for the kinematics of the rocker (4), which triggering rollers (13, 22) can be activated by the unit load (23) when said unit load (23) is transported over the transfer conveyor.

2. Transfer conveyor according to Claim 1,
**characterized in that**
the rocker (4) can be secured temporarily in a horizontal position of the transfer conveyor under the control of the triggering rollers (13, 22).

3. Transfer conveyor according to Claims 1 to 2,
**characterized in that**
in the home position of the rocker (4) one of the ends of the transfer conveyor is aligned with the plane of the relatively low height level, and at the other end of the transfer conveyor at least the first transporting roller (11) thereof is arranged underneath the support plane of the unit load (23).

4. Transfer conveyor according to Claim 3,
**characterized in that**
at least one of the triggering rollers (13) is positioned adjacent to the at least first transporting roller (11) and above the conveying plane of the transfer conveyor, which at least one triggering roller (13) is pressed downward during the transportation of the unit load (23) over the transporting rollers (13) of the transfer conveyor, and triggers a catch (19) which, by latching into a stationary counterbearing (21), secures the rocker (4) and therefore the transfer conveyor in the horizontal as long as the unit load (23) is located on the transfer conveyor.

5. Transfer conveyor according to one of Claims 2 to 4,
**characterized in that**
at least a second triggering roller (22) of the same type is arranged in the region of the opposite end of the rocker (4) between the transporting rollers (10), which second triggering roller is operatively connected to the first triggering roller (13) and/or the catch (19) and is held underneath the conveying plane of the transfer conveyor by the unit load (23) resting thereon, until the outer edge of said unit load (23) releases the triggering roller (13 or 22, respectively) and therefore the catch (19) in the counterbearing (21), with the result that the transfer conveyor can be moved back into its home position.

6. Transfer conveyor according to Claim 5,
**characterized in that**
when a unit load (23) is transported from the low height level to the other height level, the unit load (23) which is to be transported is firstly transferred to the transfer conveyor at the same level, wherein the unit load (23) moves the second triggering roller (22), and the first triggering roller (13) connected thereto, under the transporting plane of the transfer conveyor and as a result places the catch (19), which is operatively connected thereto, in a standby position.

7. Transfer conveyor according to Claim 6,
**characterized in that**
when the unit load is transported over the pivoting axis (6) of the rocker (4), the rocker (4) tilts into the horizontal, in which position the catch (19) moves out of its standby position and into the counterbearing (21), and locks the rocker (4) while at the same time the first triggering roller (13) is held down by the unit load.

8. Transfer conveyor according to Claim 7,
**characterized in that**
after the transfer conveyor has exited and the first and second triggering rollers (13 and 22) have become free of the unit load (23), the triggering rollers (13 and 22) can move back into their home positions above the transporting plane, and the rocker (4) pivots back into its home position as a result of the catch (19) being released.

9. Transfer conveyor according to Claim 1,
**characterized in that**
means are provided by which the rocker (4) is secured in the horizontal position and the unit load (23) is transferred in this position to the transporting means (3).

10. Transfer conveyor according to Claims 1 and 9,
**characterized in that**
the transfer conveyor forms a transporting plane located in the horizontal position of the rocker (4) above the loading plane of the transporting means (3).

## Revendications

1. Convoyeur de transfert pour transporter des unités de chargement normalisées, comme des conteneurs de fret, des palettes ou analogues, d'un premier niveau en hauteur à un deuxième niveau en hauteur, le convoyeur de transfert faisant partie d'une bascule, qui peut être réglée en inclinaison autour d'un axe de pivotement prévu, rapporté à l'étendue longitudinale du convoyeur de transfert, dans la zone médiane de la bascule d'une position, dans laquelle l'une des extrémités de la bascule est alignée avec l'un des niveaux en hauteur, à une deuxième position, dans laquelle l'autre extrémité de la bascule est alignée avec l'autre niveau en hauteur, la bascule pouvant pivoter par le propre poids de l'unité (23 ) de chargement transportée sur le convoyeur de transfert, dans lequel
la bascule (4 ) a, lors du transport d'une unité (23 ) de chargement d'un emplacement (2 ) de stockage plus haut à un moyen (3 ) de transport plus bas,
- une position de départ, dans laquelle l'extrémité de la bascule (4) tournée vers le moyen ( 3 ) de transport est plus basse que l'extrémité de la bascule ( 4 ) tournée vers l'emplacement (2 ) de stockage et
- une position horizontale, dans laquelle elle est poussée par le propre poids de l'unité ( 23 ) de chargement transportée sur le convoyeur de transfert,
**caractérisé en ce que**
le convoyeur de transfert est un convoyeur à rouleaux entre les rouleaux ( 10 ) de transport moteurs duquel sont prévus, pour la cinématique de la bascule ( 22 ), des rouleaux ( 13, 22 ) de déclenchement individuels montés en dessous du plan de convoyage du convoyeur de transfert et pouvant sortir en pivotant vers le haut de celui-ci, qui, lors du transport de l'unité (23) de chargement, peuvent être actionnés par celle-ci par l'intermédiaire du convoyeur de transfert.

2. Convoyeur de transfert suivant la revendication 1,
**caractérisé en ce que**
la bascule ( 4 ) peut, en étant commandée par les rouleaux (13, 22 ) de déclenchement, être fixée provisoirement dans une position horizontale du convoyeur de transfert.

3. Convoyeur de transfert suivant les revendications 1 à 2,
**caractérisé en ce que**
dans la position de départ de la bascule ( 4 ), l'une des extrémités du convoyeur de transfert est alignée avec le plan du niveau en hauteur le plus bas et, à l'autre extrémité du convoyeur de transfert, au moins son premier rouleau ( 11 ) de transfert est disposé en dessous du plan d'appui de l'unité ( 23 ) de chargement.

4. Convoyeur de transfert suivant la revendication 3,
**caractérisé en ce que**
au moins l'un des rouleaux ( 13 ) de déclenchement voisins du au moins un premier rouleau ( 11 ) de transport est placé au-dessus du plan de convoyage du convoyeur de transfert, lequel, lors du transport de l'unité ( 23 ) de chargement, est poussé vers le bas par les rouleaux ( 13 ) de transport du convoyeur de chargement et déclenche un cliquet (19), qui, par encliquetage dans une butée ( 21 ) fixe, immobilise la bascule ( 4) et ainsi le convoyeur de transfert dans la position horizontale, tant que l'unité ( 23 ) de chargement se trouve sur le convoyeur de transfert.

5. Convoyeur de transfert suivant l'une des revendications 2 à 4,
**caractérisé en ce que**
au moins un deuxième rouleau ( 22 ) de déclenchement de même type est disposé dans la zone de l'extrémité opposée de la bascule ( 4 ) entre les rouleaux ( 10 ) de transport, lequel est relié d'une manière active au premier rouleau ( 13 ) de déclenchement et/ou au cliquet (19) et est maintenu par l'unité ( 23 ) de chargement s'y appliquant en dessous du plan de convoyage du convoyeur de transfert jusqu'à ce que son bord extérieur dégage le rouleau ( 13 ou 22 ) de déclenchement et ainsi le cliquet ( 19 ) dans la butée ( 21 ), de sorte que le convoyeur de transfert peut revenir à sa position de départ.

6. Convoyeur de transfert suivant la revendication 5,
**caractérisé en ce que**
lors du transport d'une unité ( 23 ) de chargement du niveau en hauteur le plus bas à l'autre niveau en hauteur, l'unité ( 23 ) de chargement à transporter est transférée d'abord sur le convoyeur de transfert de même niveau, l'unité ( 23 ) de chargement déplaçant le deuxième rouleau (22) de déclenchement et le premier rouleau ( 13 ) de déclenchement qui lui est relié pour le mettre sous le plan de transport du convoyeur de transfert et pour mettre ainsi le cliquet ( 19 ), qui lui est relié de manière active, en une position de disponibilité.

7. Convoyeur de transfert suivant la revendication 6,
**caractérisé en ce que**
lors du transport de l'unité de chargement au-delà de l'axe ( 6) de pivotement de la bascule ( 4 ) , la bascule ( 4 ) vient en pivotant à l'horizontale, position dans laquelle le cliquet ( 19 ) se déplace de sa position de disponibilité à la butée (21) et verrouille la bascule (4), alors que le premier rouleau ( 13 ) de déclenchement est maintenu abaissé en même temps par l'unité ( 4 ) de chargement.

8. Convoyeur de transfert suivant la revendication 7,
**caractérisé en ce que**
après que les premier et deuxième rouleaux ( 13 et 22 ) de déclenchement ont quitté le convoyeur de transfert et se sont dégagés de l'unité ( 23 ) de chargement, les rouleaux ( 13 et 22 ) de déclenchement peuvent être ramenés dans leur position de départ au-dessus du plan de transport et, par la libération du cliquet ( 19 ), la bascule ( 4 ) rebascule dans sa position de départ.

9. Convoyeur de transfert suivant la revendication 1,
**caractérisé en ce que**
il est prévu des moyens par lesquels la bascule est immobilisée dans la position horizontale et l'unité ( 23 de chargement est transférée dans cette position au moyen ( 3 de transport.

10. Convoyeur de transfert suivant les revendications 1 et 9,
**caractérisé en ce que**
le convoyeur de transfert forme un plan de transport, qui se trouve dans la position horizontale de la bascule ( 4 ) au-dessus du plan de chargement du moyen ( 3 ) de transport.
